# EUROPÄISCHE PATENTSCHRIFT

(11) **EP 1 318 694 B1**
(45) Veröffentlichungstag und Bekanntmachung des Hinweises auf die Patenterteilung: **17.02.2010**
(21) Anmeldenummer: 01129025.1
(22) Anmeldetag: 06.12.2001
(51) Int. Cl.: H05B 3/50

(54) **Elektrische Heizvorrichtung**
Electrical heating device
Dispositif de chauffage électrique

(43) Veröffentlichungstag der Anmeldung: 11.06.2003
(60) Teilanmeldung: 08013118.8
(73) Patentinhaber: Eberspächer catem GmbH & Co. KG, 76863 Herxheim bei Landau (DE)
(72) Erfinder: Bohlender, Franz, 76870 Kandel (DE)
(74) Vertreter: Grünecker, Kinkeldey, Stockmair & Schwanhäusser Anwaltssozietät

(56) Entgegenhaltungen:
- EP-A- 0 516 112
- WO-A-99/18756
- DE-A- 3 042 420
- JP-A- 02 053 628
- US-A- 4 948 953

## Beschreibung

Die Erfindung betrifft eine elektrische Heizvorrichtung gemäß dem Oberbegriff des Patentanspruchs 1. Eine solche elektrische Heizvorrichtung ist aus der JP 205 36 28 A bekannt.

In Kraftfahrzeugen, insbesondere in Kraftfahrzeugen mit verbrauchsoptimierten Verbrennungsmotoren, werden zunehmend Heizvorrichtungen zur Beheizung von Innenraum und Motor verwendet. Solche Heizvorrichtungen sind jedoch auch für andere Einsatzzwecke geeignet, beispielsweise für die Raumklimatisierung, Industrieanlagen, usw.

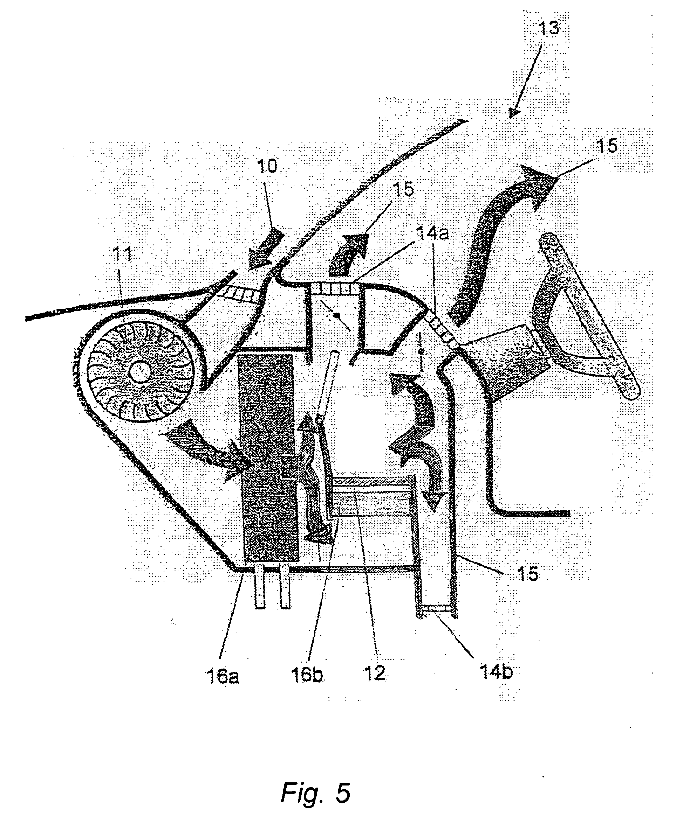

In Fig. 5 ist ein Beispiel zum Einsatz einer elektrischen Heizvorrichtung in einem Kraftfahrzeug zur Beheizung des Innenraums dargestellt. Angesaugte Frischluft 10 wird von einem Gebläse 11 über eine Heizvorrichtung 12 aufgeheizt und dem Innenraum 13 eines KFZ zugeführt. Über Luftauslässe 14a, 14b strömt die erwärmte Luft 15 in den KFZ-Innenraum 13. Zusätzlich kann die dem Innenraum 13 zuzuführende Luft zuvor über einen Verdampfer 16a einer Klimaanlage geleitet werden. Vorzugsweise stellt eine elektrische Heizvorrichtung aus PTC-Heizelementen eine Zusatzheizung dar, wobei im Normalfall eine Fahrzeugheizung 16b verwendet wird, die ihre Heizenergie aus dem KFZ-Motor bezieht.

Bekannte elektrische Heizvorrichtungen bestehen aus einem geschichteten Aufbau von in Kunststoffrahmen gehaltenen PTC-Heizelementen und Radiatorelementen. Zwischen den Radiatorelementen und den PTC-Heizelementen sind Elektrodenbleche vorgesehen, über die die PTC-Heizelemente mit Strom versorgt werden.

Nachteilig an diesen Heizvorrichtungen ist, dass in ungünstigen Einbausituationen über einen Auslass 14a in das Heiz-/Klimasystem fallende Metallteile, wie beispielsweise Büroklammern, Münzen etc. auf dem Heizelement zu liegen kommen können. Da die Radiatorelemente jeweils ungeschützt mit Masse- und Pluspotential verbunden sind, besteht die Gefahr, dass einfallende Metallteile Kurzschlüsse verursachen.

Aus DE-A1-44 36 791 ist ein Heizkörper für eine Heizungsanlage eines Kraftfahrzeugs bekannt. Der Heizkörper weist einen geschichteten Aufbau aus Wellrippen oder Welllamellen und dazwischenliegenden PTC-Heizrohren auf, in denen PTC-Heizelemente vorgesehen sind. Die in dem Heizkörper angeordneten PTC-Heizrohre bestehen aus einem an einem Ende geschlossenen dünnwandigen Aluminium-Hüllrohr. In dieses Hüllrohr ist ein aus Kunststoff bestehender Einschubrahmen mit mehreren PTC-Heizelementen eingeschoben. Die in dem Hüllrohr angeordneten PTC-Heizelemente kontaktieren auf einer Seite die Innenwand des Hüllrohres und auf der anderen Seite einen in diesem Hüllrohr angeordneten Plusleiter. Da das Hüllrohr über den Heizkörper mit Masse verbunden ist, wird der Plusleiter über einen speziellen Anschluss aus dem Heizblock herausgeführt. Zwischen dem Plusleiter und der Innenwand des Aluminium-Hüllrohres ist eine Isolierung vorgesehen.

Nachteilig an dieser Konstruktion ist, dass Beschädigungen der Isolation zwischen Plusleiter und dem Hüllrohr zu einem internen Kurzschluss führen. Ein dabei entstehender Lichtbogen kann durch eine amperische Sicherung in der Regel nicht verhindert werden.

Aus der US 4,948,953 ist ein PTC-Heizrohr bekannt, auf welches ringförmige Radiatorlagen aus einem elektrisch und wärmemäßig leitenden Material aufgeschoben sind. Das zuvor mit Rücksicht auf die DE-A1-44 36 791 beschriebene Problem besteht auch hier. Entsprechendes gilt für den aus der WO 99/18756 bekannten Heizstab, der als Tauchsieder zur Erwärmung von Flüssigkeiten die PTC-Heizelemente umgebende Radiatorelemente aus elektrisch und wärmemäßig gut leitendem Material umfasst.

Ein ähnlich zu der PTC-Heizung nach US 4,948,953 ausgebildetes PTC-Heizelement ist auch aus der EP 0 516 112 A2 bekannt. Auch dieser Heizstab bildet eine Einheit mit auf ein umfänglich geschlossenes PTC-Heizrohr aufgeschobenen ringförmigen Radiatorlagen.

Die DE-A1- 30 42 420 offenbart schließlich einen Heizstab, der beispielsweise in dem aus der US 4,948,953 bekannten PTC-Heizung zum Einsatz kommen kann. Bei diesem Stand der Technik werden die PTC-Heizelemente in eine U-förmige Wanne eingelegt, die oberseitig mit einem Aluminiumblech belegt ist. Zwischen dem Grund der Aluminiumwanne und diesem oberen Begrenzungsblech befinden sich die PTC-Heizelemente, die zwischen Elektrodenblechen angeordnet sind. Da die Aluminiumwanne sowie das obere Aluminiumblech die Außenseite des Gehäuses bilden und jeweils elektrisch leitend sind, setzt diese Ausgestaltung voraus, dass zwischen den Elektrodenblechen und der Gehäuseaußenseite Isolierplatten vorgesehen sind.

Aufgabe der Erfindung ist es, eine sicherere Konstruktion einer elektrischen Heizvorrichtung anzugeben, bei der auch eine Beschädigung einer Isolation keinen internen Kurzschluss verursacht.

Diese Aufgabe wird mit den Merkmalen des Anspruchs 1 gelöst.

Erfingdungsgemäß erfolgt die Stromzuführung zu den PTC-Heizelementen über Elektrodenbleche, die jeweils zu beiden Seiten der PTC-Elemente angeordnet sind. Diese Elektrodenbleche sind jeweils mit Radiatorelementen zur Wärmeabgabe der von den PTC-Heizelementen erzeugten Wärme verbunden. Zwischen zumindest einem der Elektrodenbleche und dem entsprechenden Radiatorelement ist eine elektrisch isolierende Isolationsschicht angeordnet.

Auf diese Weise kann verhindert werden, dass ein Heizblock benachbarte Radiatorelemente mit unterschiedlichem Potential aufweist, zwischen denen ein Kurzschluss möglich ist. Durch die Verwendung zumindest einer Isolationsschicht sind die Radiatorelemente entweder potentialfrei oder liegen nur auf einem Potential. Ein Kurzschluss zwischen Radiatorelementen ist damit nicht möglich.

Ein weiterer Vorteil dieser Anordnung ist, dass eine Beschädigung der Isolationsschicht selbst noch keinen Kurzschluss bewirken kann, sondern im Gegensatz zu herkömmlichen Heizvorrichtungen kein Kurzschluss bewirkt wird und die Beheizung des Innenraums weiterhin gewährleistet bleibt.

Ein weiterer Vorteil der erfindungsgemäßen Anordnung ist dabei sein besonders einfacher Aufbau.

Weitere vorteilhafte Ausgestaltungen der Erfindung sind Gegenstand von Unteransprüchen.

Bevorzugte Ausgestaltungen der Erfindung werden nachfolgend unter Bezugnahme auf die Figuren näher erläutert.
- Fig. 1: zeigt eine perspektivische Ansicht einer in der erfindungsgemäßen Heizvorrichtung verwendeten Radiatorbaugruppe
- Fig. 2: zeigt eine perspektivische Ansicht des Aufbaus einer Radiatorbaugruppe gemäß Fig. 1.
- Fig. 3: zeigt eine weitere Ansicht, die den erfindungsgemäßen Aufbau illustriert.
- Fig. 4: zeigt eine Gesamtansicht einer elektrischen Heizvorrichtung gemäß der vorliegenden Erfindung.
- Fig. 5: zeigt eine Schnittansicht eines KFZ-Klimatisierungssystems mit einer erfindungsgemäßen Heizvorrichtung.
- Fig. 6: zeigt das Grundprinzip einer elektrischen Heizvorrichtung gemäß einer weiteren Ausführungsform der Erfindung, bei der zur weiteren Erhöhung der Sicherheit Isolierplatten zwischen aneinandergrenzenden Radiatorelementen verwendet werden.
- Fig. 7: zeigt eine Ansicht zur Verdeutlichung des Grundprinzips einer elektrischen Heizvorrichtung gemäß einer weiteren Ausführungsform der vorliegenden Erfindung, bei der die Anzahl und Heizleistung einzelnen Heizkreise variierbar ist.

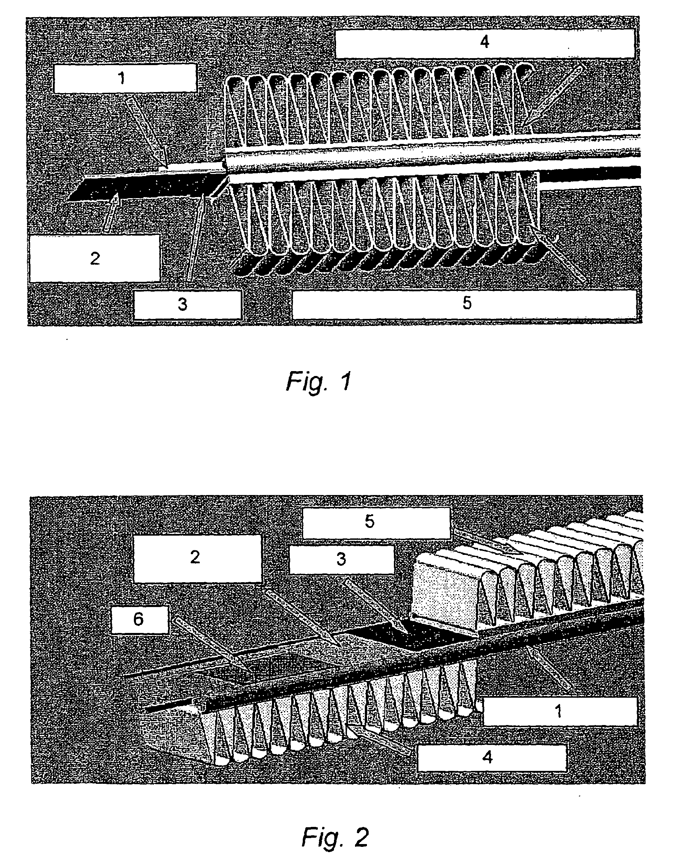

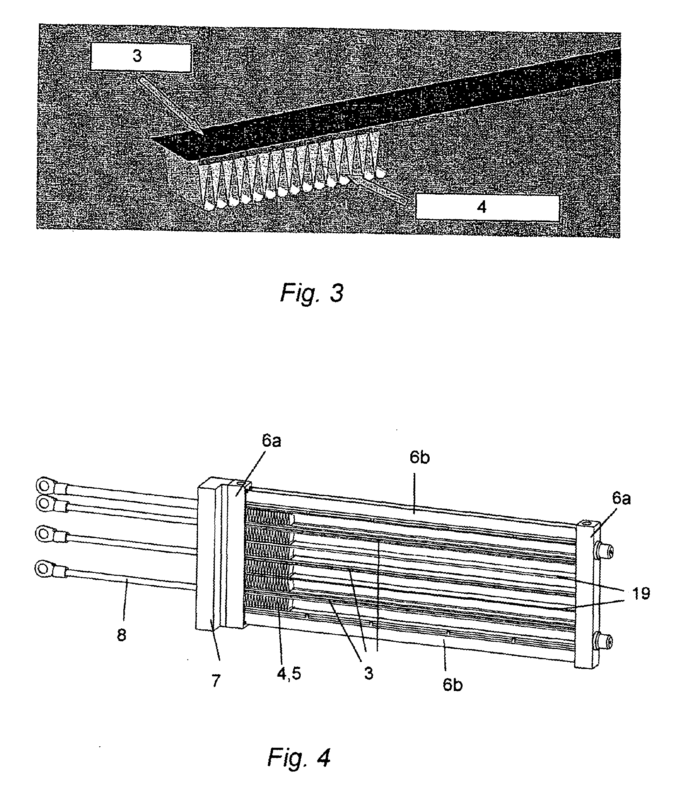

Im Folgenden wird unter Bezugnahme auf die Fig. 1 bis 4 der Aufbau einer erfindungsgemäßen Heizvorrichtung beschrieben. Fig. 4 zeigt ein Beispiel für eine Ausgestaltung der erfindungsgemäßen Heizvorrichtung. Die Vorrichtung besteht aus einer Schichtung oder Stapelung vorgefertigter Radiatorbaugruppen, zwischen denen PTC-Heizelemente zur Wärmeerzeugung vorgesehen sind. Teilansichten einer Radiatorbaugruppe sind in den Fig. 1 bis 3 wiedergegeben. Die wesentlichen Elemente einer solchen Baugruppe sind die wärmeerzeugenden PTC-Heizelemente 6 und die wärmeabgebenden Radiatorelemente 4, 5.

Die PTC-Heizelemente 6, die sowohl scheibenförmig als auch quaderförmig ausgebildet sein können, werden zur Fixierung ihrer Lage in einem Positionsrahmen 1 angeordnet. Die Gestaltung eines solchen Positionsrahmens ist in Fig. 2 dargestellt. Der Positionsrahmen 1 weist eine Mehrzahl von Aussparungen zur Aufnahme der PTC-Heizelemente 6 auf. Die Aussparungen zur Aufnahme der PTC-Heizelemente 6 sind vorzugsweise als Durchbrüche ausgeführt, sie können jedoch auch in Form von Vertiefungen ausgebildet sein. Vorzugsweise besteht der Positionsrahmen 1 aus Kunststoff, beispielsweise Polyamid. Zur Erzielung einer höheren mechanischen Stabilität kann er mit Hilfe von Glasfasern verstärkt werden.

Die in den Aussparungen eines Positionsrahmens 1 angeordneten PTC-Heizelemente 6 werden vorzugsweise mit einer Spannung von 12 Volt bis 500 Volt betrieben. Im Allgemeinen weisen die PTC-Heizelemente 6 je nach Spannung eine Dicke zwischen 2,1 bis 1,1 mm auf. In Fig. 2 ist zu erkennen, dass der Positionsrahmen 1 an seinen Seitenkanten Wölbungen aufweist, die eine geräuschfreie Luftumströmung erlauben.

Zur Befestigung und Kontaktierung der PTC-Heizelemente 6 sind jeweils auf beiden Seiten der PTC-Heizelemente 6 Kontaktbleche 2 angeordnet. Die Kontaktbleche dienen der Stromzuführung zu den PTC-Heizelementen. In den Figuren ist jeweils nur die Pluspotential-Elektrode 2 zu erkennen. Die Massepotential-Elektrode ist auf der gegenüberliegenden Seite des Positionsrahmens entsprechend angeordnet.

In einer besonderen Ausgestaltung der Erfindung werden als Elektroden selbstklebende elektrisch leitfähige Folien verwendet.

Auf den den PTC-Heizelementen 6 gegenüberliegenden Seiten der Elektrodenbleche 2 werden jeweils Radiatorelemente 4, 5 zur Abgabe der von den PTC-Heizelementen 6 erzeugten Wärme befestigt. Diese Radiatorelemente sind vorzugsweise als Wellrippenelemente ausgebildet. Dem Fachmann sind jedoch auch andere übliche Ausgestaltungen zur Abgabe der Wärme an ein durchströmendes Medium, insbesondere die durchströmende Luft bekannt.

Erfindungsgemäß wird zumindest zwischen dem Pluspotential-Elektrodenblech 2 und dem entsprechenden Radiatorelement 5 eine Isolationsschicht 3 aufgebracht. Diese Isolationsschicht 3 isoliert das Kontaktblech 2 und das Radiatorelement 5 elektrisch gegeneinander. Dadurch wird verhindert, dass das Radiatorelement 5 Pluspotential annimmt. Aufgrund der Isolierung ist das angrenzende Radiatorelement 5 potentialfrei.

Gemäß einer ersten Ausgestaltung der Erfindung ist eine Isolation des gegenüberliegenden Radiatorelementes 4, das auf Massepotential liegt, nicht erforderlich. Ein Kurzschluss zwischen beiden Radiatorelementen wird allein schon durch die Isolierung 3 verhindert.

Gemäß einer zweiten Ausgestaltung der Erfindung wird auch zwischen dem Massepotential-Elektrodenblech und dem entsprechenden Radiatorelement 4 eine Isolierung vorgesehen. Diese Ausgestaltung hat den Vorteil, dass auch bei Beschädigung einer der beiden Isolierungen ein Kurzschluss durch auf die Radiatorelemente fallende Teile nicht möglich ist.

Fig. 4 zeigt den Aufbau einer erfindungsgemäßen Innenraumheizung. Die Vorrichtung besteht aus einer Schichtung oder Stapelung vorgefertigter Radiatorgruppen, wie sie unter Bezugnahme auf die Fig. 1 bis 3 beschrieben wurden. Die Innenraumheizung der Fig. 4 umfasst insgesamt drei Heizstufen. Grundsätzlich ist eine beliebige Anzahl von Heizstufen möglich. Die dargestellte Ausführungsform kann PTC-Heizelemente mit einer Gesamtleistung von bis zu 2400 Watt aufweisen. In einer solchen geschichteten Heizvorrichtung werden die PTC-Heizelemente in einem "Klemmpaket" mit den übrigen Elementen der Heizvorrichtung gehalten. Die Klemmung wirkt dabei so, dass sie alle Elemente zusammenhält und vertikal auf die Kontaktoberflächen der PTC-Elemente wirkt.

Die Radiatorgruppen werden in einem Rahmen aus Seitenholmen 6a und Längsholmen 6b gehalten. Die elektrischen Anschlüsse 8 ragen seitlich aus einem der Seitenholme 6a zur Kontaktierung der Kontaktbleche heraus. Einer der Seitenholme 6a, 7 kann so ausgestaltet sein, dass er eine elektronische Steuerschaltung zur Ansteuerung der Heizstufen aufnehmen kann.

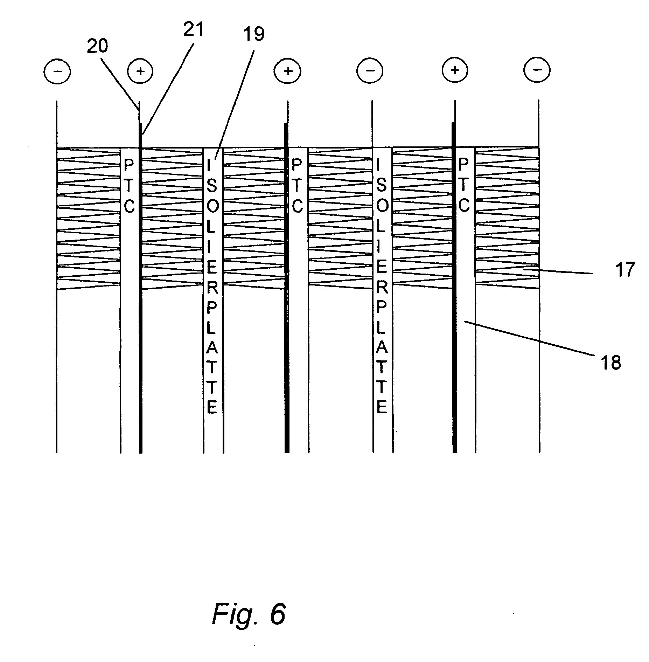

Fig. 6 zeigt eine Prinzipskizze eines besonderen Ausführungsbeispiel der erfindungsgemäßen Heizvorrichtung. Die Heizvorrichtung besteht aus einer Schichtung oder Stapelung von Radiatorelementen 17 mit PTC-Heizelementen 18. Bei dem Elektrodenblech des PTC-Heizelementes 18, das auf Plus-Potential 20 liegt, ist in der Darstellung die erfindungsgemäße Isolierschicht 21 hervorgehoben. Aufgrund dieser Isolierung das benachbarte Radiatorelement potentialfrei, wenn es nicht in elektrischem Kontakt mit einem anderen, nicht isolierten Elektrodenblech steht. Durch Verwendung der erfindungsgemäßen Isolierschicht 21 liegen alle Radiatorelemente der Heizvorrichtung entweder auf Masse-Potential oder sind potentialfrei.

Zur weiteren Erhöhung der Betriebssicherheit wird zwischen aneinandergrenzenden Radiatorelementen eine zusätzliche Isolierplatte 19 verwendet. Diese Isolierplatte 19 dient der elektrischen Isolierung aneinandergrenzender Radiatorelemente 17. Auf diese Weise werden Radiatorelemente auch dann elektrisch voneinander getrennt, wenn eine Beschädigung einer elektrischen Isolierschicht 21 auftreten sollte. Die Isolierplatte ist vorzugsweise als Kunststoff-Spritzteil ausgeführt. Alternativ dazu ist ein Stanzteil aus Isoliermaterial einsetzbar.

Der Vorteil dieser Ausführungsform liegt darin, dass auch im Beschädigungsfall der Isolierschicht 21 kein direkter Kurzschluss zwischen einem Plus-Potential-Anschluss und dem Masse-Potential erfolgt. Dadurch lassen sich auch Isolierschichten 21 verwenden, die sehr dünn ausgebildet sind, so dass sie einen sehr guten Wärmeübergang zwischen dem PTC-Heizelement 18 und dem Radiatorelement 17 gewährleisten.

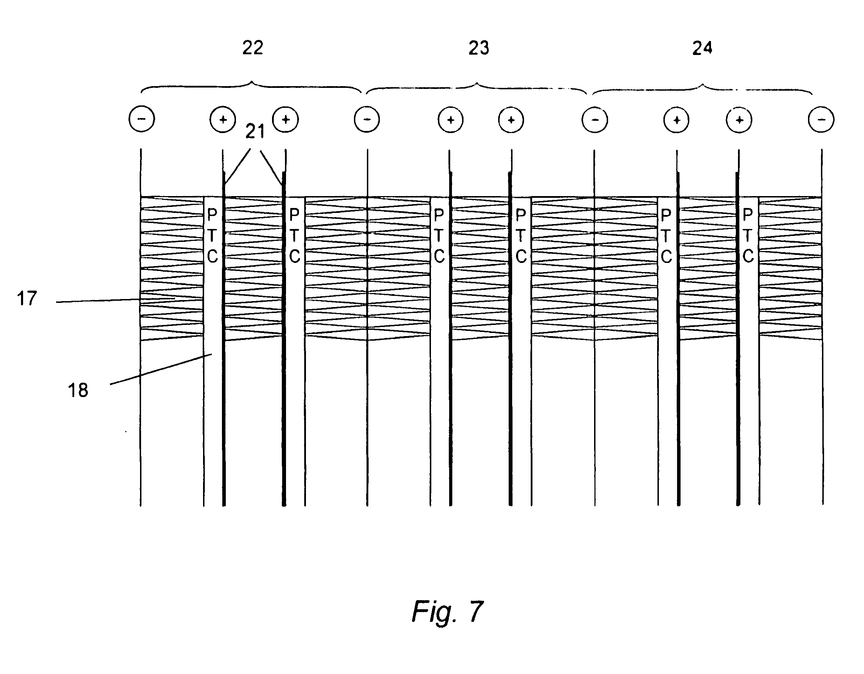

Figur 7 zeigt eine weitere vorteilhafte Ausgestaltung der erfindungsgemäßen Heizvorrichtung. Diese Ausführungsform besteht aus einem geschichteten Aufbau von Radiatorlementen 17 und PTC-Heizelementen 18. In Fig. 7 sind insgesamt drei Heizkreise 22, 23, 24 dargestellt, die jeweils in zwei Teilheizkreise unterteilbar sind. Jeder Heizkreis 22, 23, 24 besteht aus drei Radiatorelementen 17 und dazwischen angeordneten PTC-Heizelementen 18. Die Plus-Potentialzuführung zu den PTC-Heizelementen 18 ist jeweils gegenüberliegend zu dem mittleren Radiatorelement angeordnet. Dadurch, dass beide Plus-Potential-Zuführungen gegenüber dem mittleren Radiatorelement eine Isolationsschicht 21 aufweisen, sind beide Schichten der PTC-Heizelemente 18 elektrisch voneinander isoliert und lassen sich separat ansteuern. Jeder der Heizkreise 22, 23, 24 besteht somit aus einer "Doppelstufe" von Teilheizkreisen.

Während herkömmlich bei einem entsprechend aufgebauten Heizkreis aus gegenüberliegenden PTC-Reihen 18 beide PTC-Reihen nur gemeinsam ansteuerbar waren und somit eine einzige Heizstufe darstellten, lässt sich eine solche Heizstufe erfindungsgemäß bei Bedarf in zwei separat ansteuerbare Heizstufen unterteilen.

In der Prinzipskizze in Fig. 7 sind drei "Doppelstufen" 22, 23, 24 dargestellt, die sich in bis zu sechs separaten Heizkreisen aufteilen lassen. Die Anzahl der verwendeten "Doppelstufen" ist grundsätzlich beliebig und richtet sich insbesondere nach der Heizleistung jeder Doppelstufe und der gewünschten Maximalheizleistung.

Der Vorteil einer solchen Ausführungsform liegt darin, dass bei einer gefertigten elektrischen Heizvorrichtung die Anzahl der Heizstufen und die Heizleistung der einzelnen Heizstufen variabel ist. Auf diese Weise lassen sich elektrische Heizvorrichtungen jeweils an die Belastbarkeit eines Kfz-Stromkreises anpassen.

Außerdem ist auf diese Weise die Heizleistung der zu- bzw. abschaltbaren Heizstufen beliebig einstellbar. Durch die Unterteilmöglichkeit ist die jeweils erforderliche Heizleistung feiner dosierbar.

Für eine einfache Herstellung solcher Innenraumheizungen werden Radiatorbaugruppen, wie sie insbesondere in den Fig. 1 und 2 dargestellt sind, vorgefertigt. Zur Vereinfachung einer industrialisierten Herstellung von Radiatorbaugruppen werden "Heizstreifen" vorgefertigt. Ein solcher erfindungsgemäßer PTC-Heizstreifen besteht aus einem Positionsrahmen 1 mit Ausnehmungen für PTC-Heizelemente. Die Ausnehmungen sind vorzugsweise aus dem Rahmen ausgestanzt, wobei der Positionsrahmen 1 vorzugsweise ein Doppel-C-Kunststoffprofil ist. In diesem Positionsrahmen 1 sind in den Ausnehmungen PTC-Heizelemente 6 eingesetzt. Zur mechanischen Fixierung und Kontaktierung der PTC-Heizelement 6 in dem Positionsrahmen 1 werden auf der Ober- und Unterseite des Positionsrahmens 1 mit den PTC-Heizelementen 6 Elektrodenblechen befestigt. Vorzugsweise werden diese Elektrodenbleche aufgeklebt.

Erfindungsgemäß wird auf zumindest einer Seite, vorzugsweise der Pluspotential-Elektrode, eine Isolationsschicht 3 aufgebracht.

Der auf diese Weise hergestellte PTC-Heizstreifen ermöglicht eine besonders einfache industrialisierte Herstellung einer erfindungsgemäßen PTC-Heizvorrichtung.

Zusammenfassend vermeidet die vorliegende Erfindung Kurzschlüsse, die durch auf Radiatorelemente einer Heizvorrichtung fallende Metallteile verursacht werden können, dadurch, dass alle Radiatorelemente entweder potentialfrei sind oder auf Massepotential liegen. Dazu wird zumindest zwischen ein Pluspotential-Kontaktblech für die Stromzuführung zu einem PTC-Heizelement und ein benachbart angeordnetes Radiatorelement eine Isolationsschicht eingefügt.

## Patentansprüche

1. Elektrische Heizvorrichtung mit einem geschichteten Aufbau aus einer Mehrzahl an PTC-Heizelementen (18) und einer Mehrzahl an Radiatorelementen (17), wobei
jedes PTC-Heizelement (18) von zwei Elektrodenblechen (2) zur Stromzuführung kontaktiert wird, die jeweils wärmeleitend mit einem der Radiatorelemente (17) verbunden sind, und umfassend wenigstens eine elektrische Isolierung (21),
**dadurch gekennzeichnet,**
**dass** die Isolierung (21) als elektrische Isolierschicht zwischen einem Plus-Elektrodenblech (20) und dem zu diesem benachbart angeordneten Radiatorelement (17) vorgesehen ist und dass das Radiatorelement (17) an die Isolierung (21) angrenzt.

2. Elektrische Heizvorrichtung nach Anspruch 1, **dadurch gekennzeichnet, dass** die Radiatorelemente (17) als Wellrippe ausgebildet sind.

3. Elektrische Heizvorrichtung nach Anspruch 1 oder 2, **dadurch gekennzeichnet**, das jedes der beiden Elektrodenbleche (2) gegenüber dem benachbart angeordneten Radiatorelement (17) elektrisch isoliert ist.

4. Elektrische Heizvorrichtung nach einem der Ansprüche 1 bis 3, **dadurch gekennzeichnet, dass** eine Isolierplatte (19) zwischen aneinandergrenzenden Radiatorelementen (17) angeordnet ist, bei denen wenigstens eines der benachbarten Radiatorelemente (17) nicht auf Massepotential liegt.

5. Elektrische Heizvorrichtung nach einem der Ansprüche 1 bis 4, **dadurch gekennzeichnet, dass** in dem geschichteten Aufbau jeweils zwischen drei aufeinanderfolgend angeordneten Radiatorelementen (17) ein PTC-Heizelement (18) angeordnet ist und dass das Plus-Elektrodenblech (20) mit der elektrischen Isolierung (21) jeweils benachbart zu dem mittleren Radiatorelement (17) der drei benachbarten Radiatorelemente (17) angeordnet ist.

## Claims

1. Electrical heating device having a layered structure of a plurality of PTC heating elements (18) and radiator elements (17),
each PTC heating element (18) being contacted by two electrode sheets (2) so as to supply power thereto, and each of said electrode sheets (2) being connected to a radiator element (17) in a heat-conducting manner, and comprising at least an electric insulation (21),
**characterized in that**,
the electric insulation (21) is provided as an electric insulation layer between a plus electrode sheet (20) and the radiator element (17) provided adjacently thereto and that the radiator element (17) adjoins the insulation (21).

2. Electrical heating device according to claim 1, **characterized in that**, the radiator elements (17) are implemented as corrugated ribs.

3. Electrical heating device according to claim 1 or 2, **characterized in that**, each of the two electrode sheets (2) is electrically insulated from the respective radiator element (17) provided adjacently thereto.

4. Electrical heating device according to claim 1 to 3, **characterized in that**, an insulating plate (19) is arranged between adjoining radiator elements (17), at least one of said neighbouring radiator elements (17) being disconnect from ground potential.

5. Electrical heating device according to claim 1 to 4, **characterized in that**, in said layered structure, three successive radiator elements (17) have arranged between them a respective PTC heating element (18), and wherein the respective plus electrode sheet (20) with the electric insulation (21) is provided adjacently a middle radiator element (17) of the three neighbouring radiator elements (17).

## Revendications

1. Dispositif de chauffage électrique avec une structure stratifiée composée d'une pluralité d'éléments chauffants PTC (18) et d'une pluralité d'éléments radiateurs (17), où
chaque élément chauffant PTC (18) est mis en contact avec deux plaques d'électrodes (2) pour la conduction de courant, lesquelles présentent chacune une liaison thermoconductrice à un des éléments radiateurs (17), et comprenant au moins une isolation électrique (21),
**caractérisé**
**en ce que** l'isolation (21) est prévue comme couche d'isolation électrique entre une plaque d'électrode positive (20) et l'élément radiateur (17) contigu à celle-ci, et en ce que l'élément radiateur (17) est adjacent à l'isolation (21).

2. Dispositif de chauffage électrique selon la revendication 1, **caractérisé en ce que** les éléments radiateurs (17) sont réalisés comme ailettes ondulées.

3. Dispositif de chauffage électrique selon la revendication 1 ou la revendication 2, **caractérisé en ce que** chacune des deux plaques d'électrodes (2) est électriquement isolée par rapport à l'élément radiateur (17) contigu.

4. Dispositif de chauffage électrique selon l'une des revendications 1 à 3, **caractérisé en ce qu'**une plaque isolante (19) est disposée entre des éléments radiateurs (17) adjacents, pour lesquels au moins un des éléments radiateurs (17) contigus n'est pas relié au potentiel de masse.

5. Dispositif de chauffage électrique selon l'une des revendications 1 à 4, **caractérisé en ce que**, dans la structure stratifiée, un élément chauffant PTC (18) est toujours disposé entre trois éléments radiateurs (17) successifs, et **en ce que** la plaque d'électrode positive (20) avec l'isolation électrique (21) est toujours contiguë à l'élément radiateur (17) central des trois éléments radiateurs (17) contigus.
